# FASCICULE DE BREVET EUROPEEN

(11) **EP 2 602 184 B1**
(45) Date de publication et mention de la délivrance du brevet: **07.03.2018**
(21) Numéro de dépôt: 12194845.9
(22) Date de dépôt: 29.11.2012
(51) Int. Cl.: B64C 25/26, E05C 3/24, B64C 25/30

(54) **Boîtier d'accrochage à actionneur de déverrouillage à came cylindrique**
Verriegelungsgehäuse mit einem Entriegelungsglied mit einer zylindrischen Nocken
A latching box with an unlocking actuator having a cylindrical cam

(30) Priorité: 09.12.2011 FR 1161434; 09.12.2011 FR 1161431
(43) Date de publication de la demande: 12.06.2013
(73) Titulaire: Safran Landing Systems, 78140 Vélizy-Villacoublay (FR)
(72) Inventeur: Dufay, Ludovic, 78140 Velizy-Villacoublay (FR); Evenor, Eric, 78140 Velizy-Villacoublay (FR); Lecourtier, Gilbert, 78140 Velizy-Villacoublay (FR); Liegois, Pierre-Yves, 78140 Velizy-Villacoublay (FR)
(74) Mandataire: Parzy, Benjamin Alain

(56) Documents cités:
- DE-A1-102007 032 779
- US-A1- 2003 164 422
- US-B2- 7 883 125

## Description

L'invention est relative à un boîtier d'accrochage pour retenir des atterrisseurs lorsqu'ils sont en position escamotée dans leur soute, ou pour retenir des trappes de soute d'atterrisseur en position fermée.

### ARRIERE-PLAN TECHNOLOGIQUE

Le document US 2003/0164422, qui est considéré l'état de la technique le plus proche, montre un boîtier d'accrochage connu par la personne du métier. On connaît du document US7883125 des boîtiers d'accrochage pour retenir sélectivement en position un élément mobile tel qu'un atterrisseur ou une trappe, les boîtiers comportant un crochet monté mobile entre une position engagée et une position désengagée avec l'élément mobile, un organe de verrouillage mobile entre une position de blocage du crochet en position engagée et une position de libération du crochet, et deux actionneurs, dont un actionneur à came dont la came coopère avec l'organe de verrouillage pour le déplacer vers la position de libération.

Dans ce document, le crochet, l'organe de verrouillage et la came sont tous montés rotatifs selon des axes parallèles. L'utilisation d'une came rotative permet de simplifier la commande de l'actionneur, puisque celui-ci est réarmable en faisant effectuer à la came un tour complet. Ainsi, pour commander l'actionneur, il suffit d'alimenter son moteur jusqu'à ce qu'un capteur de position indique qu'un tour complet ait été effectué.

Cependant, dans ces agencements, l'actionneur de secours à came s'étend en saillie d'une face du boîtier et augmente donc considérablement l'encombrement de celui-ci.

### OBJET DE L'INVENTION

L'invention a pour objet un boîtier d'accrochage à actionneur à came d'encombrement réduit.

### RESUME DE L'INVENTION

A cet effet, on propose un boîtier d'accrochage pour retenir sélectivement en position un élément mobile tel qu'un atterrisseur ou une trappe, le boîtier comportant un corps portant :
- un crochet monté mobile à rotation selon un premier axe de rotation entre une position engagée et une position désengagée avec l'élément mobile,
- un organe de verrouillage monté mobile à rotation selon un deuxième axe de rotation parallèle au premier axe de rotation entre une position de blocage du crochet en position d'engagement et une position de libération du crochet,
- et au moins un actionneur à came dont la came coopère opérationnellement avec l'organe de verrouillage pour le déplacer vers la position de libération.

Selon l'invention, la came de l'actionneur est une came cylindrique tournant autour d'un axe de rotation orthogonal à l'axe de rotation de l'organe de verrouillage.

Ainsi, l'actionneur peut être couché le long d'un corps du boîtier d'accrochage ou être disposé en saillie d'un bord périphérique de celui-ci, ce qui diminue considérablement l'encombrement du boîtier d'accrochage.

### BREVE DESCRIPTION DES FIGURES

L'invention sera mieux comprise à la lumière de la description qui suit d'un mode particulier de réalisation de l'invention, en référence aux figures des dessins annexés parmi lesquelles :
- les figures 1A et 1B sont des vues extérieures d'un boîtier d'accrochage selon l'invention, le crochet étant en position d'engagement sur la figure 1A et en position désengagée sur la figure 1B, la platine supérieure du corps du boîtier ayant été omise pour faciliter la compréhension du mécanisme ;
- la figure 2 est un schéma de fonctionnement de l'actionneur de déverrouillage secours équipant le boîtier d'accrochage de la figure 1 ;
- La figure 3 est une vue interne de l'agencement des composants de l'actionneur de déverrouillage secours de la figure 2.

### DESCRIPTION DETAILLEE D'UN MODE DE REALISATION

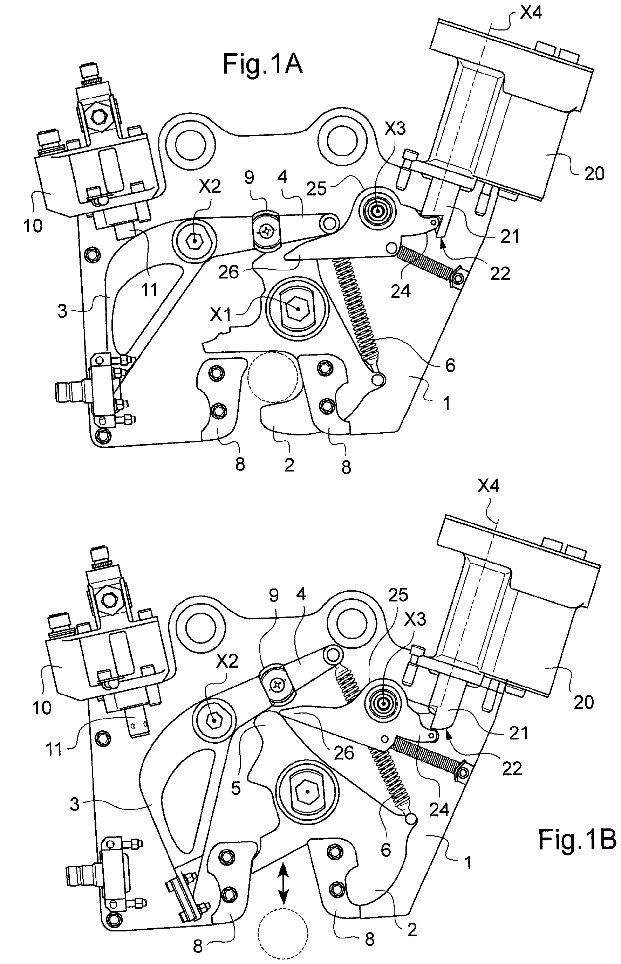

En référence aux figures 1A et 1B, le boîtier d'accrochage de l'invention comporte un corps délimité par une platine inférieure 1 et une platine supérieure, identique à la platine inférieure, qui a été omise ici pour plus de clarté. Il faut bien sûr comprendre que le corps du boîtier est relativement plat, son épaisseur étant définie par la distance entre les platines.

Entre les deux platines, un crochet 2 est monté pour pivoter autour d'un axe de rotation X1 entre une position engagée représentée à la figure 1A dans laquelle le crochet engage une olive (en pointillés) solidaire d'un élément mobile à immobiliser, et une position désengagée représentée à la figure 1B dans laquelle l'olive est libérée. Sur ces figures, on distingue les guides 8 servant à guider l'olive lors de son trajet (selon la flèche).

De façon connue en soi, le crochet 2 est amené en position engagée par l'olive qui repousse le crochet 2. Le crochet 2 est maintenu verrouillé dans la position engagée par un levier de verrouillage 3 également monté pivotant entre les platines selon un axe de rotation X2 parallèle à l'axe de rotation X1 du crochet 2. Le levier de verrouillage 3 comporte un bras 4 qui porte un galet 9 qui coopère avec un appendice 5 du crochet 2 qui est rappelé en appui contre le galet 9 par un ressort 6 attelé entre le crochet 2 et le levier de verrouillage 3. Sur la figure 1A, le levier de verrouillage 3 est en position de verrouillage, tandis que sur la figure 1B, le levier de verrouillage 3 est en position de libération.

Un actionneur de déverrouillage principal 10 est disposé sur le corps du boîtier pour agir sur le levier de verrouillage 3 pour le faire pivoter de la position de verrouillage à la position de libération. A cet effet, l'actionneur de déverrouillage principal 10 comporte une tige 11 télescopique qui saille de l'actionneur pour repousser l'organe de verrouillage. L'actionneur de déverrouillage principal 10 s'étend ici en saillie d'un bord périphérique du corps du boîtier, la tige 11 étant engagée entre les platines.

Un actionneur de déverrouillage secours 20 est prévu pour pouvoir déverrouiller le crochet 2 au cas où l'actionneur de déverrouillage principal 10 serait défaillant. L'actionneur de déverrouillage secours 20 est un actionneur à came 21 rotative. Ici, et selon l'invention, la came 21 est une came cylindrique en forme de cloche dont le bord terminal 22 définit une rampe en hélice adaptée à coopérer avec un premier bras 24 d'un renvoi 25 monté pivotant sur la platine 1 selon un axe de rotation X3 parallèle à l'axe de rotation X2 de l'organe de verrouillage. Le renvoi 25 a un deuxième bras 26 qui coopère avec l'organe de verrouillage 3 pour repousser celui-ci et ainsi libérer le crochet 2 quand le renvoi 25 est contraint à pivoter sous l'effet de la rotation de la came cylindrique 21.

Selon un aspect important de l'invention, la came 21 est montée pivotante autour d'un axe X4 qui est orthogonal à l'axe de rotation X2 de l'organe de verrouillage 3.

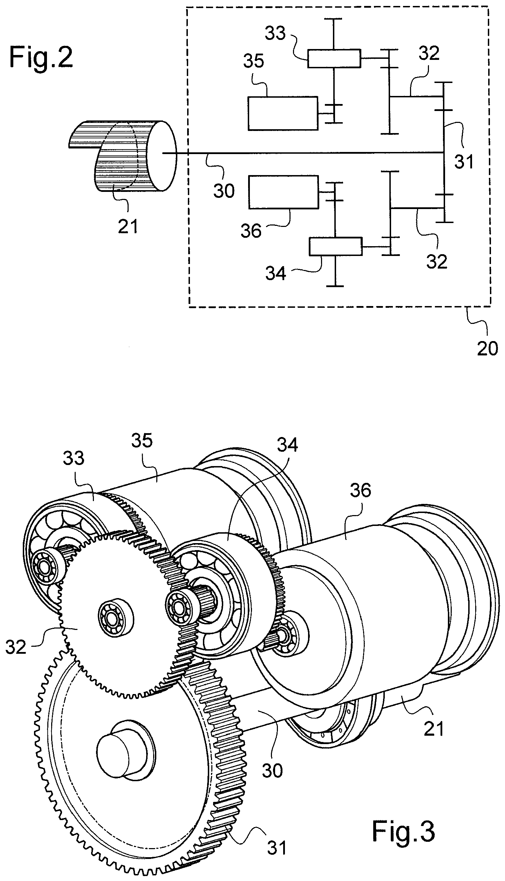

Comme cela est plus visible sur la figure 2, la came 21 est solidaire d'un arbre 30 qui porte une roue 31 qui collabore avec un réducteur 32, lui-même attaqué par deux roues libres 33 et 34. Les roues libres 33 et 34 comportent des couronnes qui sont attaquées par des pignons de sortie de deux moteurs électriques 35 et 36. L'utilisation de deux roues libres permet d'entraîner l'arbre 30 par l'un des moteurs, même si l'autre moteur est défaillant et/ou bloqué. Il convient bien sûr que les deux roues libres soient montées libres dans le même sens de rotation. On remarquera que sur la figure 2, le réducteur 32 a été représenté dédoublé pour plus de clarté, mais dans le mode de réalisation illustré à la figure 3, il n'y en a qu'un seul.

Dans l'agencement illustré sur cette figure 3, on constate que les deux moteurs sont proches les uns des autres. Les roues libres 33 et 34 sont rapprochées. Ici, l'actionneur est symétrique par rapport à un plan passant par les axes de rotation de l'arbre 30 et du réducteur 32. Comme on peut le constater sur la figure, tous les éléments tournants de l'actionneur tournent selon des axes parallèles. On constate également que les moteurs s'étendent le long de l'arbre 30 de la came 21, ce qui conduit à un agencement particulièrement compact.

Comme cela est visible aux figures 1A et 1B, l'actionneur de déverrouillage secours 20 est disposé sur le corps du boîtier pour s'étendre en saillie du bord périphérique de celui-ci, de sorte que l'épaisseur du boîtier d'accrochage est particulièrement réduit.

Bien sûr, l'actionneur de déverrouillage secours 20 est réarmable en faisant faire un tour complet à la came cylindrique 21. L'actionneur 20 peut être commandé de façon très simple, en alimentant l'un ou l'autre de ses moteurs 35, 36 jusqu'à ce que la came fasse un tour complet, ce qui peut se repérer à l'aide d'un simple capteur de position angulaire disposé par exemple sur l'arbre 30 portant la came 21.

L'invention n'est bien sûr pas limitée à ce qui vient d'être décrit, mais englobe au contraire toute variante entrant dans le cadre défini par les revendications.

En particulier, bien que la came cylindrique 21 attaque l'organe de verrouillage 3 par l'intermédiaire d'un renvoi 25, ce qui permet de démultiplier le déplacement imposé par la came cylindrique 21, on pourra bien sûr faire attaquer l'organe de verrouillage 3 directement par la came, ou encore interposer un poussoir entre la came et l'organe de verrouillage. Dans tous les cas, la came coopère opérationnellement avec l'organe de verrouillage, soit par contact direct, soit par interposition d'un élément intermédiaire.

Bien que la came soit ici portée par l'actionneur de déverrouillage secours, elle pourra bien sûr équiper un actionneur de déverrouillage principal rotatif.

Bien que l'actionneur à came illustré est du type à deux voies convergentes avec deux moteurs associés à l'arbre de la came par des roues libres, on pourra bien sûr actionner la came par tout autre dispositif, par exemple un actionneur à deux voies ségréguées, ou encore un actionneur à simple voie, si la fiabilité est jugée suffisante.

## Revendications

1. Boîtier d'accrochage pour retenir sélectivement en position un élément mobile tel qu'un atterrisseur ou une trappe, le boîtier comportant un corps portant :
- un crochet (2) monté mobile à rotation selon un premier axe de rotation (X1) entre une position engagée et une position désengagée avec l'élément mobile,
- un organe de verrouillage (3) monté mobile à rotation selon un deuxième axe de rotation (X2) parallèle au premier axe de rotation entre une position de blocage du crochet en position d'engagement et une position de libération du crochet,
- et au moins un actionneur à came (20) dont la came coopère opérationnellement avec l'organe de verrouillage pour le déplacer vers la position de libération ;
le boîtier d'accrochage étant **caractérisé en ce que** la came de l'actionneur est une came cylindrique (21) tournant autour d'un axe de rotation (X4) orthogonal aux premier et deuxième axes de rotation.

2. Boîtier d'accrochage selon la revendication 1, dans lequel la came cylindrique coopère avec un premier bras (24) d'un renvoi (25) monté pivotant sur le boîtier autour d'un troisième axe de rotation (X3) parallèle aux premier et deuxième axe de rotation, le renvoi ayant un deuxième bras (26) coopérant avec l'organe de déverrouillage pour repousser celui-ci lorsque la came est pivotée.

3. Boîtier d'accrochage selon la revendication 1, dans lequel l'actionneur (20) comporte, outre la came cylindrique, un certain nombre d'éléments tournants (30...36), dont au moins un moteur, lesdits éléments tournant tous autour d'axes de rotation parallèles à celui de la came.

4. Boitier d'accrochage selon la revendication 3, dans lequel l'actionneur comporte deux roues libres (33, 34) liées en rotation à un arbre (30) portant la came, les roues libres étant entraînées par des moteurs électriques respectifs (35, 36).

5. Boîtier d'accrochage selon la revendication 4, dans lequel la came est portée par un arbre qui comporte une roue dentée (31) attaquée un réducteur (32) lui-même attaqué par les roues libres.

## Patentansprüche

1. Verriegelungsgehäuse zum selektiven Halten eines beweglichen Elements, wie z. B. eines Fahrwerk oder einer Klappe, in Position, wobei das Gehäuse einen Körper umfasst, der trägt:
- einen Haken (2), der drehbeweglich um eine erste Drehachse (X1) zwischen einer in Bezug auf das bewegliche Element in Eingriff stehenden Position und einer ausgerückten Position gelagert ist;
- ein Verriegelungsorgan (3), das drehbeweglich um eine zweite Drehachse (X2), die parallel zur ersten Drehachse ist, zwischen einer Blockierposition zum Blockieren des Hakens in der Eingriffsposition und einer Freigabeposition zur Freigabe des Hakens gelagert ist,
- und mindestens einen Nockenaktor (20), dessen Nocken funktionsfähig mit dem Verriegelungsorgan zusammenwirkt, um es in Richtung der Freigabeposition zu verschieben,
wobei das Verriegelungsgehäuse dadurch gekenntzeichnet ist, dass der Nocken des Aktors ein zylindrischer Nocken (21) ist, der sich um eine Drehachse (X4) dreht, die orthogonal zur ersten und zweiten Drehachse ist.

2. Verriegelungsgehäuse nach Anspruch 1, bei dem der zylindrische Nocken mit einem ersten Arm (24) einer Umlenkung (25) zusammenwirkt, die drehbar an dem Gehäuse um eine dritte Drehachse (X3) gelagert ist, die parallel zur ersten und zweiten Drehachse ist, wobei die Umlenkung einen zweiten Arm (26) hat, der mit dem Entriegelungsorgan zusammenwirkt, um dieses wegzuschieben, wenn der Nocken gedreht wird.

3. Verriegelungsgehäuse nach Anspruch 1, bei dem der Aktor (20) außer dem zylindrischen Nocken eine bestimmte Anzahl von sich drehenden Elementen (30...36) umfasst, darunter mindestens einen Motor, wobei sich die genannten Elemente alle um Drehachsen drehen, die parallel zur der des Nockens sind.

4. Verriegelungsgehäuse nach Anspruch 3, bei dem der Aktor zwei Freiläufe (33, 34) umfasst, die drehfest mit einer Welle (30) verbunden sind, die den Nocken trägt, wobei die Freiläufe von jeweiligen Elektromotoren (35, 36) angetrieben werden.

5. Verriegelungsgehäuse nach Anspruch 4, bei der der Nocken von einer Welle getragen wird, die ein Zahnrad (31) umfasst, das in ein Untersetzungsgetriebe eingreift, das selbst mit den Freiläufen in Eingriff steht.

## Claims

1. A latching box for selectively retaining a movable element such as an undercarriage or a hatch in position, the box comprising a body carrying:
• a hook pivotally mounted about a first pivot axis between an engaged position and a disengaged position relative to the movable element;
• a locking member pivotally mounted about a second pivot axis parallel to the first pivot axis to pivot between a position for blocking the hook in the engagement position and a release position for releasing the hook; and
• at least one cam actuator in which the cam co-operates operationally with the locking member to move it towards the release position;
wherein the cam of the actuator is a cylindrical cam rotatable about an axis of rotation orthogonal to the first and second pivot axes.

2. A latching box according to claim 1, wherein the cylindrical cam co-operates with a first arm of a rocker pivotally mounted on the box about a third pivot axis parallel to the first and second pivot axes, the rocker having a second arm co-operating with the unlocking member to push it back when the cam is rotated.

3. A latching box according to claim 1, wherein the actuator includes, in addition to the cylindrical cam, a certain number of rotary elements including at least one motor, said rotary elements all rotating about axes of rotation parallel to the axis of the cam.

4. A latching box according to claim 3, wherein the actuator has two freewheels linked in rotation with a shaft carrying the cam, the freewheels being driven by respective electric motors.

5. A latching box according to claim 4, wherein the cam is carried by a shaft that includes a toothed wheel engaged by stepdown gearing itself engaged by the freewheels.
